# EUROPEAN PATENT APPLICATION

(11) **EP 4 822 288 A1**
(43) Date of publication of application: **14.10.2026**
(21) Application number: 25218953.5
(22) Date of filing: 27.11.2025
(51) Int. Cl.: G01B 5/207, G01B 7/287, G01B 21/20, G01B 21/32

(54) **METHOD AND APPARATUS FOR MEASURING DEFORMATION AMOUNT OF TRAY FOR SECONDARY BATTERY**

(30) Priority: 08.04.2025 KR 20250045742
(71) Applicant: SAMSUNG SDI CO., LTD., Yongin-si, Gyeonggi-do 17084 (KR)
(72) Inventor: KIM, Jonghun, 17084 Yongin-si (KR); KO, Minjae, 17084 Yongin-si (KR); KIM, Seungho, 17084 Yongin-si (KR); BAE, Jeil, 17084 Yongin-si (KR)
(74) Representative: Marks & Clerk LLP

(57) **Abstract**

The present disclosure provides a method and apparatus for measuring a deformation amount of a tray (80). The method of measuring a deformation amount of a tray (80) for a secondary battery includes: fixing a tray (80) for a secondary battery; moving the tray (80) to a reference position; measuring displacement at a plurality of measurement points on the tray (80); and storing and analyzing data of the measured displacement, calculating a deformation amount, and evaluating a state of the tray (80).

## Description

### BACKGROUND

### 1. Field

Aspects of embodiments of the present disclosure relate to a method and apparatus for measuring a deformation amount of a tray for a secondary battery.

### 2. Description of the Related Art

Different from primary batteries that are not designed to be (re)charged, secondary batteries are batteries that are designed to be charged and discharged. Low-capacity secondary batteries may be used in portable, small electronic devices, such as smartphones, feature phones, laptop computers, digital cameras, and camcorders, while large-capacity secondary batteries are widely used as power sources for driving motors in hybrid vehicles, electric vehicles, and the like as well as for power storage batteries. A secondary battery generally includes an electrode assembly including (or formed of) a positive electrode and a negative electrode, a case accommodating the electrode assembly, and electrode terminals connected to the electrode assembly.

From among the manufacturing processes of the secondary batteries, a formation process is a process that induces electrochemical activation by performing initial charging and discharging of a battery cell and has a significant influence on the performance, stability, and lifespan of the battery.

Trays used in the formation process or during movement of secondary batteries safely support and transport the battery cells, but the trays are often gradually deformed or damaged due to repeated loads and long-term use.

Currently, a tray is primarily checked through visual inspection, and when the tray is found to be severely deformed or damaged, the tray is replaced. However, such visual inspection cannot accurately measure a deformation amount and has limitations in detecting minute deformation and performing preventive maintenance. For example, when the deformation accumulates, it can affect the safety of battery cells and may cause a major accident.

The above information disclosed in this Background section is for enhancement of understanding of the background of the present disclosure, and therefore, it may contain information that does not constitute related (or prior) art.

### SUMMARY

Embodiments of the present disclosure provide a method and apparatus for measuring a deformation amount of a tray, which are capable of measuring a deformation amount of a tray for a secondary battery and analyzing the deformation amount to evaluate a state of the tray.

According to an embodiment of the present disclosure, a method of measuring a deformation amount of a tray for a secondary battery includes, fixing the tray, moving the tray to a reference position, measuring displacement at a plurality of measurement points on the tray, and storing and analyzing data of the measured displacement, calculating a deformation amount, and evaluating a state of the tray.

The fixing of the tray may be performed by a fixing part in contact with a side surface of the tray to prevent the tray from shaking and tilting.

The reference position may be adjusted by using a raising/lowering unit below the tray.

The plurality of measurement points disclosure may include the center of the tray and locations where load distribution and deformation are likely to occur, including locations around the center of the tray.

The deformation amount may be calculated by comparing the measured displacement data with a reference distance, and when the deformation amount exceeds a reference value, a warning for maintenance or replacement may be generated.

The warning may be transmitted to a management system and reflected in a maintenance plan.

The displacement data measured may be stored and analyzed and used to predict an expected lifetime of the tray and establish a maintenance plan.

According to another embodiment of the present disclosure, an apparatus for measuring a deformation amount of a tray for a secondary battery includes, a fixing part configured to fix the tray, a raising/lowering unit configured to move the tray to a reference position, a displacement sensor configured to measure displacement at a plurality of measurement points on the tray, a data processing unit configured to store and analyze data of the measured displacement to calculate a deformation amount and evaluate a state of the tray, and a controller configured to control operations of the fixing part, the raising/lowering unit, the displacement sensor, and the data processing unit.

The raising/lowering unit may include, a rack jack below the tray and configured to raise/lower the tray, and a back-up unit configured to support the tray and maintain the tray in a horizontal state.

The plurality of measurement points may include a center of the tray and locations where load distribution and deformation are likely to occur, including locations around the center of the tray.

The displacement sensor may be at a center of the tray and the plurality of measurement points and may measure displacement between the tray and a reference distance at each point.

The data processing unit may compare the measured displacement data with a reference distance and, when the measured displacement data exceeds a reference value, the data processing unit may generate a warning for maintenance or replacement.

The warning may be transmitted to an internal management system and reflected in a maintenance plan.

The data processing unit may predict an expected lifetime of the tray according to the measured displacement data and may generate a maintenance time.

The controller may synchronize movement of the reference position of the tray and the measurement of the displacement sensor and transmit the data to the data processing unit in real time.

According to another embodiment of the present disclosure, a method of measuring a deformation amount of a tray for a secondary battery includes fixing the tray, moving the tray to a reference position, measuring displacement at a plurality of measurement points on the tray in real time, calculating a deformation amount by comparing data of the measured displacement with a reference distance, when the calculated deformation amount exceeds a reference value, generating a warning, and predicting an expected lifetime of the tray according to the deformation amount.

The reference position may be adjusted by using the raising/lowering unit below the tray.

The measuring of the displacement may be performed by using the plurality of displacement sensors at a center of the tray and the locations where deformation is likely to occur, including locations around the center of the tray.

The calculating of the deformation amount may include calculating the overall deformation amount of the tray by integrating the displacement data acquired at the plurality of measurement points and additionally analyzing a local deformation amount at a specific portion.

The predicting of the expected lifetime may predict a usage period of the tray by combining the deformation amount data and an environmental condition.

Aspects and features of the present disclosure are not limited to those described above, and other aspects and features not specifically mentioned herein will be clearly understood by those skilled in the art from the description of the present disclosure, provided below.
At least some of the above and other features of the invention are set out in the claims.

### BRIEF DESCRIPTION OF THE DRAWINGS

The following drawings attached to the specification illustrate embodiments of the present disclosure and further describe aspects and features of the present disclosure together with the detailed description of the present disclosure. Thus, the present disclosure should not be construed as being limited to the drawings, in which:
FIG. 1 is a schematic diagram illustrating a pouch-type secondary battery;
FIG. 2 is a cross-sectional view illustrating a cylindrical secondary battery;
FIG. 3A is a top perspective view illustrating an exterior of a prismatic secondary battery;
FIG. 3B is a cross-sectional view taken along the line I-I' in FIG. 3A;
FIG. 4 is an schematic diagram illustrating a secondary battery module in which secondary batteries are disposed;
FIG. 5 is a schematic diagram illustrating a secondary battery pack including the secondary battery module shown in FIG. 4;
FIG. 6 is a diagram illustrating a vehicle including the secondary battery pack shown in FIG. 5;
FIG. 7 is a flowchart describing steps of a method of measuring a deformation amount of a tray for a secondary battery according to an embodiment of the present disclosure;
FIG. 8 is a diagram describing an apparatus for measuring a deformation amount of a tray for a secondary battery according to another embodiment of the present disclosure;
FIG. 9 is a flowchart describing steps of a method of measuring a deformation amount of a tray for a secondary battery according to another embodiment of the present disclosure;
FIG. 10 is a configuration diagram illustrating components of a system for measuring a deformation amount of a tray for a secondary battery according to an embodiment of the present disclosure; and
FIG. 11 is a diagram illustrating a plurality of measurement points and displacement sensors for measuring a deformation amount of a tray for a secondary battery according to an embodiment of the present disclosure.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. In addition, the same reference numerals may be assigned to the same components in different embodiments.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "linked", "coupled," or "connected" to each other, or another component may be "interposed" between the components.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

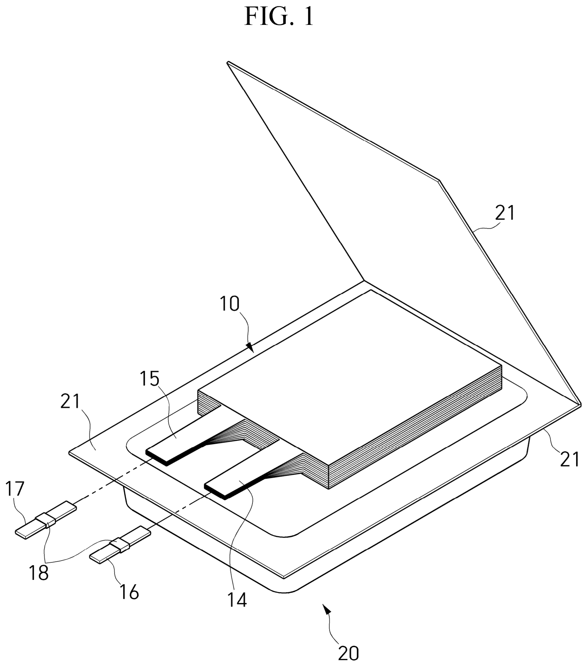

FIG. 1 schematically illustrates the pouch-type secondary battery.

The pouch-type secondary battery includes an electrode assembly 10 and a pouch 20 that accommodates the electrode assembly 10.

The electrode assembly 10 includes a first electrode tab 14 and a second electrode tab 15, which may be electrically connected to respective external first and second terminal leads 16 and 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof come into contact with each other while accommodating the electrode assembly 10 therein, and the sealing may be achieved while the tab film 18 is interposed between the sealing parts 21. The sealing parts 21 of the pouch 20 may each be made of a thermal fusion material that generally exhibits weak adhesion to metal. Thus, the pouch 20 may be sealed around the first and second terminal leads 16 and 17 by interposing the thin tab film 18 between the sealing parts 21.

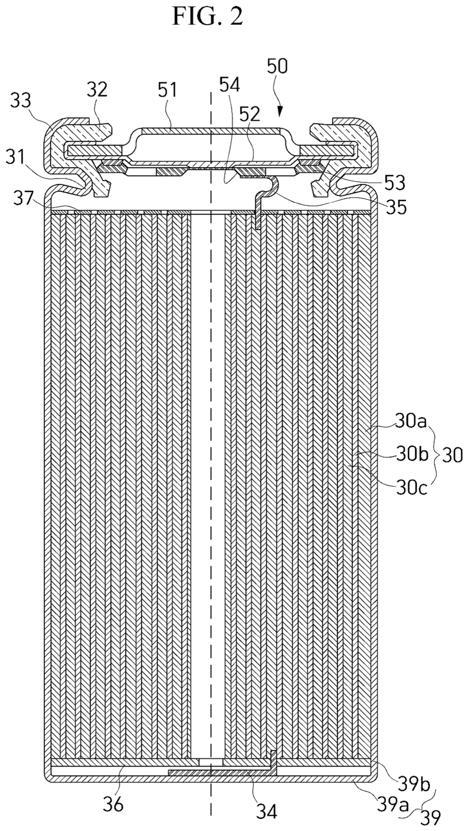

FIG. 2 illustrates a cylindrical secondary battery. As shown in FIG. 2, the secondary battery includes an electrode assembly 30, a case 39 accommodating the electrode assembly 30 and an electrolyte therein, a cap assembly 50 coupled to an opening in the case 39 to seal the case 39, and an insulating plate 37 positioned between the electrode assembly 30 and the cap assembly 50 inside the case 39.

The electrode assembly 30 may include a separator 30b and a first electrode 30c and a second electrode 30a positioned with the separator 30b interposed therebetween and may be wound in a jelly-roll shape.

The first electrode 30c includes a first substrate and a first active material layer on the first substrate. A first lead tab 35 may extend outwardly from a first uncoated portion of the first substrate at where the first active material layer is not present, and the first lead tab 35 may be electrically connected to the cap assembly 50.

The second electrode 30a includes a second substrate and a second active material layer on the second substrate. A second lead tab 34 may extend outwardly from a second uncoated portion of the second substrate at where the second active material layer is not present, and the second lead tab 34 may be electrically connected to the case 39. The first lead tab 35 and the second lead tab 34 may extend in opposite directions.

The first electrode 30c may act as a positive electrode. In such an embodiment, the first substrate may be made of, for example, an aluminum foil, and the first active material layer may include, for example, a transition metal oxide. The second electrode 30a may act as a negative electrode. In such an embodiment, the second substrate may be made of, for example, a copper foil or a nickel foil, and the second active material layer may include graphite, for example.

The separator 30b prevents a short circuit between the first electrode 30c and the second electrode 30a while allowing for movement of lithium ions therebetween. The separator 30b may be made of, for example, a polyethylene film, a polypropylene film, a polyethylene-polypropylene film, or the like.

The case 39 accommodates the electrode assembly 30 and, together with the cap assembly 50, forms the external appearance of the secondary battery. The case 39 may have a substantially cylindrical body portion 39b and a bottom portion 39a connected to (or at) one side (e.g., to one end) of the body portion 39b. A beading part 31 (e.g., a bead) deformed inwardly may be formed in the body portion 39b, and a crimping part 33 (e.g., a crimp) bent inwardly may be formed at an open end of the body portion 39b.

The beading part 31 can reduce or prevent movement of the electrode assembly 30 inside the case 39 and can facilitate seating of the gasket 32 and the cap assembly 50. The crimping part 33 may firmly fix the cap assembly 50 by pressing the edge of the case 39 against the gasket 32. The case 39 may be formed of steel plated with nickel, for example.

The cap assembly 50 may be fixed to the inside of the crimping part 33 by a gasket 32 to seal the case 39. The cap assembly 50 may include a cap up 51, a safety vent 52, a cap down 53, an insulating member, and a sub plate 54 but is not limited thereto and may be modified in various ways.

The cap up 51 may be positioned at (or may form) the uppermost part of the cap assembly 50. The cap up 51 may include a terminal part that protrudes upwardly and is to be connected to an external circuit, and an outlet for discharging gas may be arranged around the terminal part.

The safety vent 52 may be located under the cap up 51. The safety vent 52 may include a protrusion part that protrudes convexly downwardly and is connected to the sub plate 54, and at least one notch may be formed in the safety vent around the protrusion part.

When gas is generated due to overcharging or abnormal operation of the secondary battery, the protrusion part is deformed upwardly by the pressure and separates from the sub plate 54 while the safety vent 52 is cut (e.g., bursts or tears) along the notch. The cut safety vent 52 may prevent the secondary battery from exploding by allowing the gas to be discharged to the outside.

The cap down 53 may be below the safety vent 52. The cap down 53 may have a first opening for exposing the protrusion part of the safety vent 52 and a second opening for gas discharge. The insulating member may be positioned between the safety vent 52 and the cap down 53 to insulate the safety vent 52 and the cap down 53.

The sub plate 54 may be under the cap down 53. The sub plate 54 may be fixed to a lower surface of the cap down 53 to block the first opening in the cap down 53, and the protrusion part of the safety vent 53 may be fixed to the sub plate 54. The first lead tab 35, which is drawn out from the electrode assembly 30 may be fixed to the sub plate 54. Accordingly, the cap up 51, the safety vent 52, the cap down 53, and the sub plate 54 may be electrically connected to the first electrode 30c of the electrode assembly 30.

The insulating plate 37 may be positioned to be in contact with the electrode assembly 30 below the beading part 31. The insulating plate 37 may have a tab opening through which the first lead tab 35 is drawn out (or extends). The cap assembly 50, which is electrically connected to the first electrode 30c by the first lead tab 35, may face the electrode assembly 30 with the insulating plate 37 interposed therebetween and may maintain a state of being insulated (e.g., electrically insulated) from the electrode assembly 30 by the insulating plate 37. Another insulating plate 36 may be included at the bottom of the electrode assembly 30 for insulation between the electrode assembly 30 and the bottom portion 39a of the case 39.

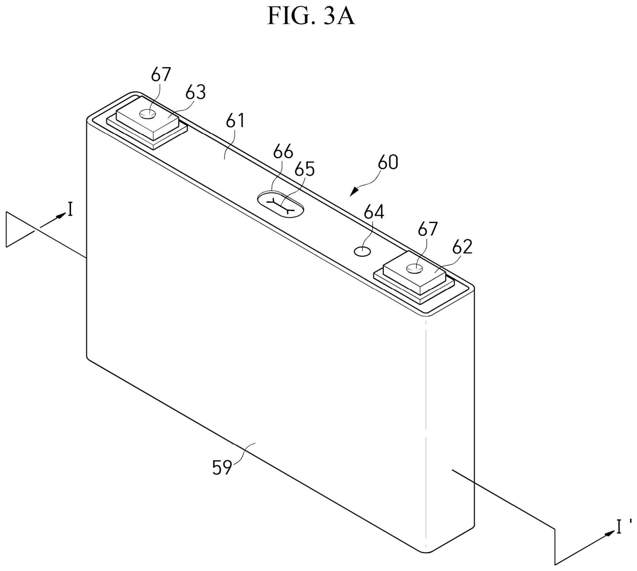

FIG. 3A is a top perspective view of a prismatic secondary battery according to some embodiments of the present disclosure.

A case 59 defines an overall appearance of the prismatic secondary battery and may be made of a conductive metal, such as aluminum, aluminum alloy, or nickel-plated steel. In addition, the case 59 may provide (or may form) a space for accommodating an electrode assembly therein.

A cap assembly 60 may include a cap plate 61 that covers an opening in the case 59. In some embodiments, the case 59 and the cap plate 61 may be made of a conductive material. A first terminal 62 and a second terminal 63 may be electrically connected to respective positive and negative (or negative and positive) electrodes inside the case 59 and may be installed to protrude outwardly through the cap plate 61.

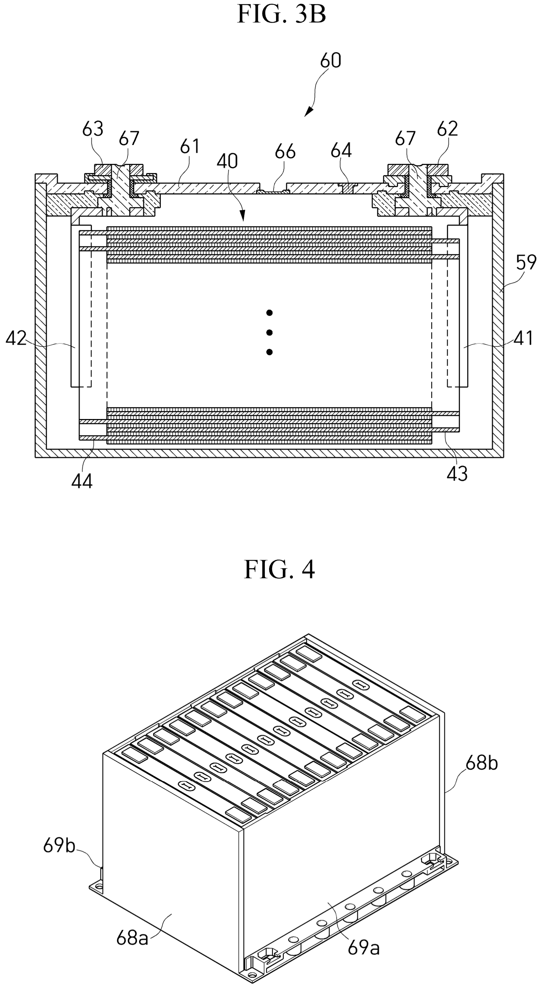

FIG. 3B is a cross-sectional view taken along the line I-I' in FIG. 3A according to some embodiments of the present disclosure.

As shown, a prismatic secondary battery may include an electrode assembly 40, a first current collector 41, a first terminal 62, a second current collector 42, a second terminal 63, the case 59, and the cap assembly 60.

An electrode assembly 40 may be formed by winding or stacking first electrode plates, separators, and second electrode plates, which are formed as thin plates or films. When the electrode assembly 40 is a wound stack, a winding axis may be parallel to the longitudinal direction of the case 59. In other embodiments, the electrode assembly 40 is a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab (e.g., a first uncoated portion) 43, which is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) 44, which is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing for the movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors may be located at the top of the electrode assembly 40.

As illustrated in FIG. 3B, the first current collector 41 and the second current collector 42 are connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. For example, the connection members 67 may also be coupled to the first terminal 62 and the second terminal 63 by riveting or welding.

In addition, in FIGS. 3A and 3B, the cap plate 61 may have an electrolyte injection port 64 formed to receive a sealing plug (or seal pin) and a vent 66 having a notch 65. The vent 66 is for discharging excess gas generated inside the secondary battery.

FIG. 4 is a perspective view of a secondary battery module in which secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement direction and number to provide desired voltage and current specifications. The secondary batteries may, for example, be any of, pouch, cylindrical, or prismatic cells.

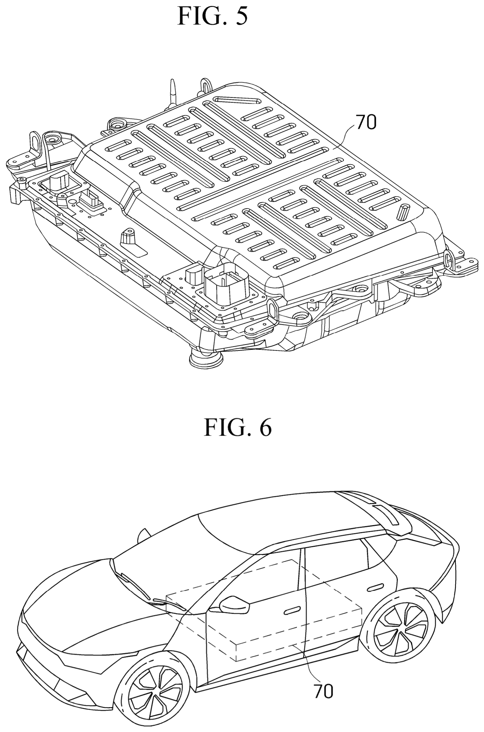

FIG. 5 is a perspective view of a battery pack 70 according to embodiments of the present disclosure. Referring to FIG. 5, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 6 shows a vehicle that includes the battery pack 70 shown in FIG. 5 on the lower body thereof. The vehicle may operate by (e.g., may be powered by) receiving power from the battery pack 70.

In a formation process of secondary batteries, trays for secondary batteries may be used. The trays are designed to stably support and transport secondary battery cells and to withstand loads and impacts that may occur in various environments during the process, according to the size, weight, and shape of the battery cells. That is, the tray is appropriately designed according to the size, weight, and shape of the secondary battery, such as a pouch type, a cylindrical type, a prismatic type, etc.

As high-capacity and high-weight battery cells increase, the strength and durability of the tray for a secondary battery is increasingly emphasized, and a probability of tray deformation or damage increases due to continuous loads, thermal changes, and repeated movements that occur during tray use.

Therefore, a deformation state of the tray should be periodically measured and evaluated to maintain safety and reliability.

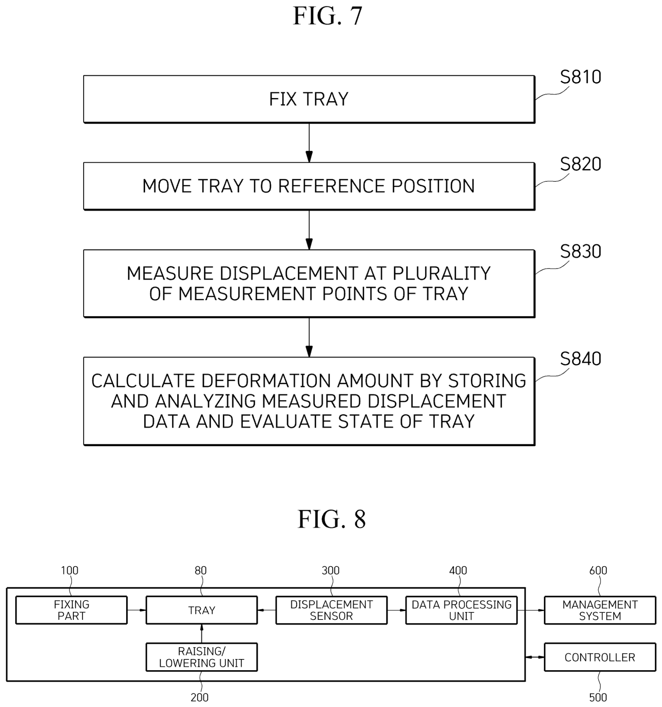

FIG. 7 is a flowchart describing steps of a method of measuring a deformation amount of a tray for a secondary battery according to an embodiment of the present disclosure.

As described above, the method of measuring a deformation amount of a tray for a secondary battery according to an embodiment of the present disclosure includes an operation S810 of fixing the tray, an operation S820 of moving the tray to a reference position, an operation S830 of measuring displacement at a plurality of measurement points of the tray, and an operation S840 of calculating a deformation amount by storing and analyzing the measured displacement data and evaluating a state of the tray.

The deformation amount is calculated by utilizing displacement data of the tray and a state of the tray is analyzed so that time points of (e.g., estimated time of) maintenance and replacement can be predicted.

First, the operation S810 of fixing the tray is an operation of fixing the tray without shaking or tilting when the tray is transported to a logistics frame. In this way, an error of the tray due to external factors during the measurement process can be minimized.

The fixing of the tray, according to an embodiment of the present disclosure, may be performed by a fixing part in contact with, for example, a side surface of the tray, to prevent shaking and tilting of the tray. A 'side surface' includes any surface or more than one surface, or any part or parts thereof.

The fixing part is in contact with the, for example, side surface of the tray to prevent shaking and tilting, may be formed to have (e.g., to provide) an adjustable fixing force to allow the tray to be stably maintained while ascending or measuring displacement, and may provide structural flexibility that can be applied to trays of various sizes.

In addition, the fixing part may operate in cooperation with a raising/lowering unit. The fixing part is designed to maintain a fixed state without shaking even after the tray reaches the reference position, and a friction-reducing material may be used on a surface of the fixing part to prevent damage to the tray during the fixing process. For example, a silicone pad or low-friction coating material may be attached to a contact surface of the fixing part to reduce friction with the tray while securing stable fixation.

In addition, the fixing part may include a plurality of fixing pins or clamps disposed along the side surface of the tray to apply a constant pressure to maintain the tray without shaking during a measurement process. The operation of the fixing part is controlled by a controller of a system, and when the fixing state is unstable or the tray is not properly fixed, an alarm may be generated to notify a user of a problem.

In one embodiment, the fixing part comes into contact with the side surface of the tray and fixes the tray so that it does not shake (or vibrate). For example, the fixing part has a structure in which a plurality of fixing pins operates to press the tray on the side surface thereof, and a contact surface of the fixing pin is covered with a silicone pad to provide friction while protecting the tray surface. While the raising/lowering unit moves the tray to a reference position, the fixing part maintains the tray in a stably fixed state and minimizes an external impact or vibration that may occur during a displacement measurement process. The fixing part is adjustable according to a size of the tray, and a fixed pressure is monitored via a sensor to prevent damage to the tray due to excessive pressure.

Accordingly, according to an embodiment of the present disclosure, by fixing the tray by using the fixing part, shaking and tilting of the tray are prevented during the measurement process, and a stable environment in which displacement data can be precisely measured is provided. In this way, measurement accuracy of the deformation amount and data reliability increase and effective evaluation of a structural deformation state of the tray is achieved (or enabled).

The operation S820 of moving the tray to a reference position according to an embodiment of the present disclosure is performed by using the raising/lowering unit located at a lower end of the tray. The raising/lowering unit includes a rack jack and a back-up unit to move the tray to a reference position and moves the tray to a correct position while maintaining the tray horizontally. The reference position is an ideal state for measuring displacement.

The reference position, according to an embodiment of the present disclosure, may be adjusted by using the raising/lowering unit disposed below the tray.

The reference position is accurately and stably adjusted by using the raising/lowering unit to move the tray to a position suitable for measuring the deformation amount. Accordingly, the accuracy of displacement measurement increases and data reliability is secured.

The reference position may be an optimal height or position for measuring the displacement of the tray and is set (or is determined or entered) by using the raising/lowering unit. The raising/lowering unit is located at the lower end of the tray and moves the tray vertically. The raising/lowering unit includes the rack jack and the back-up unit and is formed to provide stability while moving the tray to a desired position.

The rack jack is a device that moves a tray vertically by using mechanical or electrical power, includes fixed pillars and a sliding structure that moves along the pillars, and transmits a stop signal to the controller when the tray reaches a reference position. The back-up unit distributes a load of the raising/lowering unit while maintaining a horizontal state of the tray and prevents the tray from tilting or shaking during movement.

The controller controls the raising/lowering unit, and a set value for the reference position is defined in advance by the user or the system. The reference position is set to a specific height that is suitable for measuring the displacement of the tray and may be flexibly adjusted according to the size of the tray and the measurement environment. In addition, the raising/lowering unit may be configured to detect a loading condition of the tray to prevent damage due to an excessive load.

In one embodiment, the raising/lowering unit uses the rack jack and the back-up unit to move the tray to the reference position. The rack jack is driven by an electric motor and provides precision for adjusting the tray in fine units (e.g., about 0.1 mm). The back-up unit stably supports a lower end portion of the tray and is controlled to maintain the tray in a horizontal state by linking with (e.g., by incorporating or referencing) a level. The raising/lowering unit may include a locking mechanism for stably maintaining the tray after the tray reaches the reference position. For example, the raising/lowering unit may include a vibration absorber for minimizing the shaking of the tray while the tray moves to the reference position. These components allow the same performance to be provided to trays having various sizes and in various load conditions.

Accordingly, according to an embodiment of the present disclosure, by adjusting the reference position by using the raising/lowering unit, the accuracy of displacement measurement of the tray is increased and the reliability of deformation amount analysis is secured. Accordingly, a state evaluation of the tray and maintenance planning may be done more precisely and efficiently.

The operation S830 of measuring the displacement of the tray at a plurality of measurement points, according to an embodiment of the present disclosure, is performed by using a displacement sensor at locations where deformation is likely to occur, such as the center and load concentration points on the tray. The displacement sensor may detect the displacement between the tray and the reference distance at the measurement point in real time, and the measured displacement data may be transmitted to a data processing unit. Data collection at a plurality of measurement points allows for analysis of the overall state of the tray.

The plurality of measurement points, according to an embodiment of the present disclosure, may include the center of the tray and locations where load distribution and deformation are likely to occur.

The center of the tray is a location where deformation is likely to occur when a load is not distributed uniformly, and the displacement sensor is disposed to detect a center deformation state in real time, for example.

The locations where load distribution and deformation are likely to occur are determined according to the structural characteristics and the load condition of the tray. These locations typically correspond to corners, a lower end portion, or other specific points of the tray where the load is concentrated. A local deformation amount may be measured by disposing (or arranging) displacement sensors at these locations. Accordingly, an overall deformation state may be analyzed in more detail. The displacement sensor collects distance data at each point in real time, and the collected data is transmitted to the data processing unit and used to calculate a deformation amount.

The number of measurement points and locations may be adjusted according to the size and structural characteristics of the tray. For example, five or more measurement points including the center and the load concentration points may be set, and a distance between the measurement points may be designed to enable uniform evaluation of the deformation state of the tray. An arrangement of the measurement points increases the accuracy of the data and allows the locations where deformation is likely to occur to be analyzed in detail.

In one embodiment, the plurality of measurement points include a total of five displacement sensors disposed at the center and corners of the tray. The sensor disposed at the center precisely measures a structural deformation amount of the tray, and the sensors disposed at the corners detect local deformation amounts due to the load concentration.

In addition, the plurality of measurement points may include a total of five displacement sensors disposed at the center and 1/4 horizontal and vertical points of the tray. The 1/4 point is a region around the center of the tray and is suitable for measuring the local deformation amount and analyzing the deformation state of an outer portion of the tray and the entire tray.

This sensor arrangement allows for concurrent (or simultaneous) evaluation of the overall and local states of the tray. Each displacement sensor detects the displacement between the tray and the reference distance in real time and transmits the displacement to the data processing unit, and the processing unit analyzes the displacement and calculates a deformation state of the tray.

Accordingly, by setting the plurality of measurement points at the center and the locations where load distribution and deformation are likely to occur according to an embodiment of the present disclosure, the overall deformation state and the local deformation amount of the tray may be accurately measured. Accordingly, the accuracy and reliability of the state evaluation is increased, and the maintenance plan of the tray is provided with more accuracy.

The operation S840 of storing and analyzing the measured displacement data to calculate deformation amount and evaluating the state of the tray, according to an embodiment of the present disclosure, is performed by the data processing unit. The data processing unit compares the displacement data with the reference distance to calculate the deformation amount, thereby analyzing the deformation state of the tray. The analyzed result is used in a state evaluation and a lifetime prediction of the tray and reflected in a maintenance or replacement plan. The data processing unit is configured to derive a long-term deformation amount trend on the basis of the stored data.

The deformation amount, according to an embodiment of the present disclosure, is calculated by comparing the measured displacement data with the reference distance, and when the deformation amount exceeds a reference value, a warning for repair or replacement is generated.

When the deformation amount exceeds a reference value, a warning for repair or replacement is generated to allow maintenance work to be performed in advance. Accordingly, the safety and efficiency of the tray is secured.

The deformation amount is calculated by comparing the displacement data with the reference distance. The displacement data is a value detected by using the displacement sensors in real time at the plurality of measurement points of the tray, and the reference distance is defined as reference data measured on the tray in a normal state. The data processing unit collects the displacement data, compares the displacement data with the reference distance, and calculates the deformation amount on the basis of the comparison result. The deformation amount is analyzed by including not only a local value at a specific point but also an average deformation amount for the entire tray.

When the deformation amount exceeds the reference value, an operation of generating a warning is included. The warning generation may be performed through the data processing unit and a warning generation module. The warning generation module compares the deformation amount data with a reference value to determine whether or not the deformation amount data exceeds the reference value and, when the deformation amount data exceeds the reference value, notifies the administrator of the determination result through a visual warning (e.g., a display or a light-emitting display (LED)) or an audible warning (e.g., an alarm). This process is linked to the management system to store warning data in real time and to allow the warning data to be reflected in the maintenance work plan.

The reference value, according to an embodiment of the present disclosure, is set according to the usage environment, the size of the tray, and the load condition. For example, a typical reference value may be set to a deformation amount of about ±0.5 mm, and when the deformation amount exceeds the reference value, data at the corresponding point is further analyzed to determine the need for maintenance or replacement work. The operation of generating the warning may include not only a function of notifying the reference value being exceeded but also an additional function of suggesting an optimal maintenance strategy on the basis of the data.

In one embodiment, the displacement sensors collect the data at the center of the tray and at five measurement points with high deformation potential. The collected displacement data is recorded with an accuracy of, for example, about 0.01 mm, and the deformation amount is calculated by comparing the displacement data with the reference distance. For example, when the displacement measured at a specific point exceeds the reference distance as much as about 0.6 mm, the warning generation module detects this case and activates a visual warning. The warning data is stored in the management system, and a maintenance team may access the warning data to check a state of the tray and perform necessary work. In other embodiments, the management system may generate a signal to move or unload the tray that is a target of the warning to a specific area and transmit a command to a programmable logic controller (PLC) or the like to automatically move or unload the tray. The warning may also be linked to a predictive analysis module to evaluate the possibility of future deformation and adjust a replacement cycle.

Accordingly, according to an embodiment of the present disclosure, the deformation amount is calculated by comparing the displacement data with the reference distance, and when the deformation amount exceeds the reference value, a warning is generated so that the deformation state of the tray may be evaluated precisely and the maintenance work may be performed efficiently. Accordingly, the safety and reliability of the tray may be ensured and maintenance costs and work time may be reduced.

The warning, according to an embodiment of the present disclosure, may be transmitted to the management system and reflected in a maintenance plan. Accordingly, an effect of automating a maintenance strategy and maximizing management efficiency by integrating deformation state data of the tray into the management system in real time is provided.

The warning is generated in the warning generation module linked to the data processing unit. The warning generation module detects a case in which the deformation amount exceeds the reference value, generates warning data, and sends the warning data to the management system. The warning data includes detailed information on the deformation state of the tray, an exceeding point, and the exceeding deformation amount and is used to establish a maintenance plan in the management system.

The management system determines a maintenance schedule, a replacement cycle, and work priority on the basis of (or according to) the warning data. The management system stores the data in a central server and automatically transmits notification to the maintenance team. The notification may be provided through email, mobile notification, or management software. The management system also stores the warning data for a long period of time, analyzes a deformation amount trend, and predicts an expected lifetime of the tray.

The warning data is integrated into the management system in real time, and the management system automatically suggests an appropriate action on the basis of the warning data. For example, a specific tray may be preferentially replaced or an additional maintenance schedule may be generated according to a warning generation frequency and severity.

In one embodiment, the management system collects the deformation amount data of the tray in real time and stores the warning data when the deformation amount data exceeds the reference value. For example, when a deformation amount of the center of a specific tray is measured as about 0.8 mm, which exceeds the reference value of about ±0.5 mm, the warning generation module transmits data including exceeding information to the management system. On the basis of (e.g., according to) the data, the management system transmits a mobile notification to the maintenance team and prioritizes the corresponding tray in an inspection schedule. The warning data is stored in a central server and is then used in analysis, and a manager may identify a tray deformation trend and optimize a maintenance plan.

Accordingly, according to an embodiment of the present disclosure, the warning data is transmitted to the management system and reflected in the maintenance plan so that the deformation amount data can be integrally managed in real time. Accordingly, an effect of efficiently evaluating the deformation state of the tray, realizing automation and optimization of the maintenance work, reducing maintenance costs and time consumption, and maximizing management efficiency is provided.

The measured displacement data, according to an embodiment of the present disclosure, may be stored and analyzed for a long period of time and used to predict an expected lifetime of the tray and establish a maintenance plan. Accordingly, an effect of continuous monitoring a state of the tray and optimizing a maintenance strategy in advance is provided.

The measured displacement data is collected at the plurality of measurement points through the displacement sensors, transmitted to the data processing unit, and stored therein. The data processing unit compares the collected displacement data with the reference distance, calculates the deformation amount, and stores the deformation amount in a database for a long period of time. The data stored for a long period of time is used to analyze a deformation trend of the tray. This data records changes in displacement and deformation amount over time, and the expected lifetime is calculated on the basis of an increase rate and a pattern of the deformation amount.

The prediction of the expected lifetime is performed by combining the displacement data tray, the load condition, the usage frequency, and environmental conditions (temperature, humidity, etc.). The data processing unit integrates and analyzes these conditions to quantitatively evaluate the lifetime of the tray and provides the information to the management system so that maintenance or replacement can be performed before the end of the lifetime. The prediction of the expected lifetime may be individually performed on a single tray as well as a plurality of trays, allowing for efficient control of the maintenance plan for the entire system.

The maintenance plan establishment is based on the expected lifetime data. The management system automatically generates a replacement cycle, an inspection schedule, and a maintenance resource allocation on the basis of the expected lifetime. The above automatic generation may be dynamically adjusted to reflect a real-time update of the displacement data. In addition, the maintenance plan is linked to the warning data to prioritize a tray and supports efficient utilization of resources.

As one example, the displacement is measured at the center and the load concentration points of the tray, for example, in units of 0.01 mm, by using the displacement sensors. The data processing unit compares the displacement data with the reference distance, calculates the deformation amount, and stores the deformation amount in a database. The stored displacement data is updated daily, and when the deformation amount of the tray exhibits a pattern of increasing as much as about 0.2 mm per month, the data processing unit analyzes the pattern and calculates that the expected lifetime of the tray is evaluated to be, for example, six months. The management system plans replacement work after five months on the basis of the expected lifetime data and automatically sets a pre-replacement inspection schedule. During this process, the plan is optimized by reflecting the usage environment of the tray (e.g., the deformation amount increases or is expected to increase at a faster rate when humidity is high).

By storing and analyzing the measured displacement data, according to an embodiment of the present disclosure, for a long period of time, the expected lifetime of the tray may be quantitatively predicted and the maintenance plan may be efficiently established. Accordingly, an effect of continuous monitoring the state of the tray, reducing unnecessary maintenance, and optimizing a replacement time, which reduces management costs and work time, is provided.

In the process of moving the tray, which is fixed to prevent shaking, to a reference position by contacting the side surfaces of the tray, the method of measuring a deformation amount of a tray for a secondary battery, according to an embodiment of the present disclosure, performs precise position adjustment while maintaining the tray horizontally by using the raising/lowering unit, which may include the rack jack and the back-up unit. The displacement sensors are disposed at the center and the load concentration points of the tray, and a distance between the sensors is set to allow a deformation state of each point to be accurately evaluated. The data processing unit collects the displacement data, calculates a difference from the reference distance, and derives the deformation amount. When the deformation amount exceeds the reference value, warning data is transmitted to the management system and a maintenance plan is automatically established.

Accordingly, the method of measuring a deformation amount of a tray for a secondary battery, according to an embodiment of the present disclosure, enables more accurate calculation of the deformation amount of the tray, evaluation of the state of the tray on the basis of the deformation amount, lifetime prediction, and the establishment of a maintenance plan. Accordingly, an effect of increasing usage efficiency of the tray and minimizing product damage and accidents due to the deformation is provided.

FIG. 8 is a diagram describing an apparatus for measuring a deformation amount of a tray for a secondary battery according to another embodiment of the present disclosure. Some of the overlapping components and configurations in the above-described embodiment may not be described again or will be only briefly described.

Referring to FIG. 8, a system for measuring a deformation amount of a tray 80 includes a fixing part 100 for fixing the tray 80, a raising/lowering unit 200 for moving the tray 80 to a reference position, a displacement sensor 300 for detecting a displacement at a plurality of measurement points of the tray 80, a data processing unit 400 for storing and analyzing the measured displacement data to calculate the deformation amount and evaluating the state of the tray 80, and a controller 500 for controlling operations of the fixing part 100, the raising/lowering unit 200, the displacement sensor 300, and the data processing unit 400.

An apparatus for measuring a deformation amount of the tray 80 includes the fixing part 100, the raising/lowering unit 200, the displacement sensor 300, the data processing unit 400, and the controller 500 and collects, stores, and analyzes the displacement data of the tray 80 to calculate the deformation amount and evaluate the state of the tray 80. In addition, by integrally managing the operations of all the components through the controller 500, an effect of increasing the accuracy and efficiency of the system is provided.

First, the fixing part 100, according to an embodiment of the present disclosure, fixes the tray 80 and prevents shaking and tilting. The fixing part 100 comes into contact with side surfaces of the tray 80 to support the tray 80 stably and provides a fixing force to prevent the tray 80 from moving during measurement. The fixing part 100 may be made of a silicone pad or low-friction material for minimizing friction and is adjustable according to a size of the tray 80.

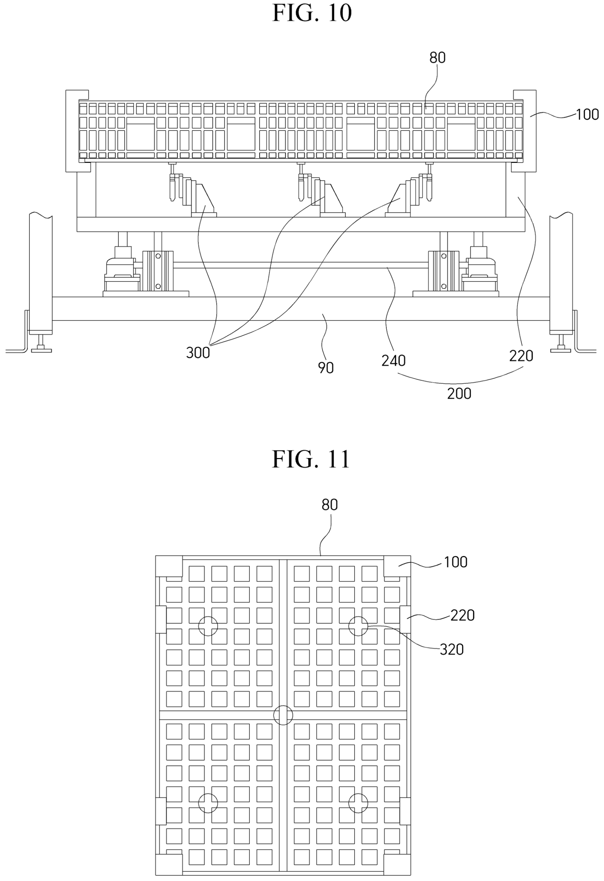

The raising/lowering unit 200, according to an embodiment of the present disclosure, moves the tray 80 to the reference position. The raising/lowering unit 200 is disposed below the tray 80 and includes a rack jack 220 and a back-up unit 240 (see, e.g., FIG. 10). The rack jack 220 moves the tray 80 vertically by using an electric motor, and the back-up unit 240 helps to maintain the tray 80 horizontally. The raising/lowering unit 200 moves the tray 80 precisely to the reference position and maintains the tray 80 in a horizontal state to ensure accuracy of the displacement measurement.

The raising/lowering unit 200, according to an embodiment of the present disclosure, may include the rack jack 220 that is disposed below the tray 80 and ascends/descends the tray 80 and the back-up unit 240 that supports the tray 80 to maintain a horizontal state.

The raising/lowering unit 200 moves the tray 80 to the reference position, and the rack jack 220 moves the tray 80 in a vertical direction and is configure to operate by using the electric motor to move the tray 80 accurately to the reference position. The rack jack 220 is has a structure in which strength and stability are considered (are ensured) and may operate without deformation even in long time use.

The back-up unit 240 helps to allow the tray 80 to maintain a horizontal state during the ascending/descending process. The back-up unit 240 stably supports a lower end portion of the tray 80 and includes the level to monitor the inclination of the tray 80 in real time. The back-up unit 240 cooperates with the rack jack 220 to maintain the tray 80 without shaking and provides an environment in which the displacement sensor 300 operates accurately.

In addition, the raising/lowering unit 200 may operate flexibly according to the load condition and size of the tray 80. The rack jack 220 raises and lowers the tray 80 at a constant speed, and the back-up unit 240 minimizes the risk of deformation of the tray 80 through load distribution. The raising/lowering unit 200 may operate in conjunction with the controller 500.

The displacement sensors 300, according to an embodiment of the present disclosure, detects the displacement at a plurality of measurement points of the tray 80. The displacement sensors 300 are disposed at the center, corners, and load concentration points of the tray 80 to measure the displacement between the tray 80 and the reference distance in real time.

As the displacement sensor 300, according to an embodiment of the present disclosure, a linear variable differential transformer (LVDT) sensor may be used, which measures the minute displacement between the tray 80 and the reference position. The LVDT sensors may measure the displacement at a total of five points located at the center and 1/4 points in horizontal and vertical directions of the tray 80. This is for analyzing the deformation state of the tray 80 in a balanced way.

The plurality of measurement points, according to an embodiment of the present disclosure, may include the center of the tray 80 and locations where load distribution and deformation are likely to occur.

The measurement points are disposed at the center of tray 80 and the locations where deformation is likely to occur. The center is a location for precise analysis of the structural deformation of the tray 80, and the displacement sensor 300 is disposed to evaluate overall stability. The displacement sensor 300 accurately detects the center displacement of the tray 80 and transmits the center displacement to the data processing unit 400.

The locations where load distribution and deformation are likely to occur include corners or points where a specific load is concentrated. These points play an important role in detecting the local deformation of the tray 80 and increasing the accuracy and reliability of data. The number of measurement points and locations may be adjusted according to the size and structural characteristics of the tray 80.

The displacement sensors 300 disposed at the plurality of measurement points, according to an embodiment of the present disclosure, collect data in real time and are used to calculate deformation amounts. This arrangement precisely analyzes the overall deformation state of the tray 80 and provides data necessary for establishing a maintenance plan.

The displacement sensors 300, according to an embodiment of the present disclosure, are disposed at the center of the tray 80 and the plurality of measurement points and measure the displacement between the tray 80 and the reference distance at each point.

The displacement sensors 300 are disposed at the center of the tray 80 and the plurality of measurement points to measure displacement. Each displacement sensor 300 detects the displacement between the tray 80 and the reference distance at a fixed position, which allows the deformation amount to be calculated and the state of the tray 80 to be evaluated.

The displacement sensor 300 disposed at the center is configured to analyze the overall deformation state, and the displacement sensor 300 installed at the plurality of measurement points detect local deformation. The displacement sensors 300 monitor the structural status of the tray 80 in real time and transmit data to the data processing unit 400.

The data processing unit 400, according to an embodiment of the present disclosure, stores and analyzes the displacement data to calculate the deformation amounts and evaluates the state of the tray 80 on the basis of the deformation amounts. The data processing unit 400 calculates the deformation amounts by comparing the displacement data with the reference distance and analyzes the overall deformation state and local deformation state of the tray 80 on the basis of the deformation amounts. The stored data is used for long-term state analysis and expected lifetime prediction.

The data processing unit 400, according to an embodiment of the present disclosure, compares the measured displacement data with the reference distance and, when the measured displacement data exceeds a reference value, the data processing unit 400 generates a warning for maintenance or replacement.

The data processing unit 400 compares the data collected from the displacement sensors 300 with the reference distance and calculates deformation amounts. When the data exceeds a reference value, the data processing unit 400 generates a warning and, thus, the state of the tray 80 may be evaluated and appropriate maintenance performed.

The warning is generated by analyzing the deformation amount data that exceeds the reference value and may be provided in the form of a visual or auditory notification. The data processing unit 400 transmits the warning data to a management system 600 to support maintenance work.

As described above, the data processing unit 400 processes the displacement data in real time and evaluates the deformation state by comparing the displacement data with the reference distance. Accordingly, the state of the tray 80 may be continuously monitored.

The warning, according to an embodiment of the present disclosure, may be transmitted to the management system (e.g., an internal management system) 600 and reflected in a maintenance plan. The management system 600 sets a replacement cycle, an inspection schedule, and a work priority on the basis of (e.g., according to) the warning data.

The management system 600 stores the warning data in a central server and, thus, automates and optimizes maintenance work. The warning data is also used to analyze a state change trend of the tray 80.

The warning data is transmitted to the maintenance team in real time. Accordingly, work efficiency and reliability can be increased, and the management system 600 may accurately evaluate the state of the tray 80 and adjust the maintenance plan on the basis of the warning data.

The data processing unit 400, according to an embodiment of the present disclosure, may predict the expected lifetime of the tray 80 and suggest a maintenance time on the basis of the measured displacement data.

The data processing unit 400 analyzes the displacement data to predict the expected lifetime of the tray 80. The data processing unit 400 stores and analyzes the collected data for a long period of time and evaluates the state of the tray 80 and calculates the lifetime thereof. The expected lifetime is calculated on the basis of the displacement data, load condition, and usage environment. The data processing unit 400 may use this data to suggest a maintenance point and automatically generate a replacement cycle and an inspection schedule. The data processing unit 400 is linked with the management system 600 to provide expected lifetime data and may efficiently establish a maintenance plan on the basis of the expected lifetime data.

The controller 500, according to an embodiment of the present disclosure, integrally controls the operations of the fixing part 100, the raising/lowering unit 200, the displacement sensor 300, and the data processing unit 400. The controller 500 synchronizes the operations of the components and processes data generated during measurement in real time. In addition, when the tray 80 fails to reach the reference position or the displacement sensor 300 detects an error, the controller 500 generates a warning to stably maintain the system operation. The controller 500 is configured to be linked with the management system 600 to centralize and process all data.

The controller 500, according to an embodiment of the present disclosure, may synchronize a reference position movement of the tray 80 and the data collection of the displacement sensor 300 and transmit the data to the data processing unit 400 in real time.

The controller 500 controls the reference position movement of the tray 80 and interacts with the raising/lowering unit 200 to accurately move the tray 80 to the reference position. The controller 500 controls the operations of the rack jack 220 and the back-up unit 240 to help the tray 80 stably move without shaking and generates a warning when the position is not accurately set (or achieved).

In addition, the controller 500 controls the data collection of the displacement sensor 300 in real time. When the displacement sensors 300 detect the displacement at the measurement points, the controller 500 monitors operating states of the displacement sensors 300 and performs synchronization to allow the data of all the displacement sensors 300 to be accurately collected. The synchronized data is collected without a time loss or delay to ensure data reliability.

In addition, the controller 500 transmits the data to the data processing unit 400 in real time. The data transmission process is performed by using a wired or wireless network, and the displacement data is analyzed in the data processing unit 400 and used to calculate the deformation amount. The controller 500 maintains the stability of data transmission and evaluates the state of the tray 80 and supports the maintenance plan in conjunction with the data processing unit 400. The controller 500 may be linked with the management system to help the data to be reflected in the overall maintenance process.

As described above, the apparatus for measuring a deformation amount of the tray 80 for secondary battery, according to an embodiment of the present disclosure, may precisely calculate the deformation amount by collecting, storing, and analyzing the displacement data of the tray 80 in real time through the fixing part 100, the raising/lowering unit 200, the displacement sensor 300, the data processing unit 400, and the controller 500. Accordingly, the state of the tray 80 can be efficiently evaluated and the accuracy and efficiency of maintenance work can be increased.

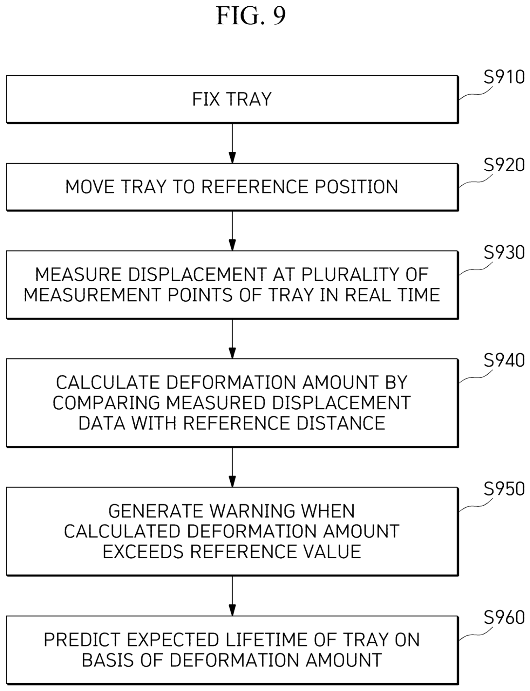

FIG. 9 is a flowchart describing steps of a method of measuring a deformation amount of a tray for a secondary battery according to another embodiment of the present disclosure. Some of the overlapping components and configuration in the above-described embodiments may not be repeatedly described or may be only briefly described.

Referring to FIG. 9, a method of measuring a deformation amount of a tray for a secondary battery, according to an embodiment of the present disclosure, includes operation S910 of fixing the tray, operation S920 of moving the tray to a reference position, operation S930 of measuring the displacement at a plurality of measurement points of the tray in real time, operation S940 of calculating a deformation amount by comparing the measured displacement data with the reference distance, operation S950 of generating a warning when the calculated deformation amount exceeds a reference value, and operation S960 of predicting an expected lifetime of the tray on the basis of the deformation amount.

According to an embodiment of the present disclosure, the method of measuring a deformation amount of a tray for a secondary battery fixes the tray, moves the tray to the reference position, measures the displacement at the plurality of measurement points in real time, calculates the deformation amount on the basis of the displacement, and generates a warning when the deformation amount exceeds the reference value. In addition, by analyzing deformation amount data to predict the expected lifetime of the tray, an optimized maintenance plan is provided.

First, operation S910 of fixing the tray is performed by using the fixing part to allow the tray to be stably maintained without shaking or tilting during the measurement. The fixing part comes into contact with side surfaces of the tray to stably support the tray and provides a fixing force to prevent the tray from moving during measurement. The fixing part is adjustable according to a size and a shape of the tray and is made of a wear-resistant material.

In addition, operation S920 of moving the tray to the reference position is performed by using the raising/lowering unit below the tray.

The reference position is (e.g., is set to) an optimal position for accurately measuring the displacement of the tray by moving the tray to a reference (or preset or predetermined) position to increase the precision of measurement and is adjusted by using the raising/lowering unit located below the tray. The raising/lowering unit includes the rack jack for moving the tray in a vertical direction and the back-up unit for maintaining the tray in a horizontal state.

The raising/lowering unit receives an operating command from the controller to move the tray to the reference position and prevents the tray from shaking or tilting during the movement process. The rack jack moves the tray at a constant speed, and the back-up unit continuously maintains the tray in the horizontal state, thereby ensuring the reliability of the displacement measurement process.

In addition, operation S930 of measuring the displacement at the plurality of measurement points in real time is performed by using the displacement sensors. The displacement sensors are disposed at the center of the tray and locations where deformation is likely to occur and collect the measured data in real time and transmits the measured data to the data processing unit.

The operation of measuring the displacement, according to an embodiment of the present disclosure, may be performed by using the plurality of displacement sensors at the center of the tray and the locations where deformation is likely to occur.

The displacement sensors are disposed at the center of the tray and structural weak portions, such as load concentration points, to collect the displacement data in real time. The displacement sensors detect the displacement between the tray and the reference distance at fixed (e.g., preset or predetermined) locations.

The displacement sensors analyze the displacement of the center of the tray to evaluate the overall state and detect local deformation by measuring the displacement of the load concentration points. The displacement sensors transmit data to the data processing unit through real-time data collection.

The arrangement points of the plurality of displacement sensors may be adjusted according to the size and structural characteristics of the tray. The data collected at the measurement point is transmitted to the data processing unit, compared with the reference distance, and used to calculate the deformation amount and evaluate the state of the tray.

Then, operation S950 of calculating the deformation amount by comparing the measured displacement data with the reference distance is performed in the data processing unit. The data processing unit stores and analyzes the displacement data and calculates the deformation amount by comparing the displacement data with the reference distance. During this process, when the deformation amount exceeds the reference value, a warning for maintenance or replacement is generated. The warning data is transmitted to the management system and reflected in the maintenance plan.

The operation of calculating the deformation amount, according to an embodiment of the present disclosure, may include an operation of calculating the overall deformation amount of the tray by integrating the displacement data acquired at the plurality of measurement points and additionally analyzing a local deformation amount at a specific portion.

The displacement data acquired at the plurality of measurement points is integrated by the data processing unit. The displacement data is collected in real time at the center of the tray and the locations where deformation is likely to occur, and the data processing unit integrates the data to calculate the overall deformation amount of the tray. The integration process of the displacement data is performed by arranging the data in chronological order, summing the data at each measurement point, and analyzing the overall deformation state of the tray.

In the operation of calculating the deformation amount, the local deformation amount at the specific portion is additionally analyzed. The specific portion is defined as a point where a load is concentrated or a structural weakness is present and the deformation amount at the corresponding portion provides important information for detecting a local structural problem in advance. The local deformation amount analysis compares the data at the measurement points and analyzes whether or not the displacement increases sharply or exhibits an abnormal change at a specific point to evaluate the possibility of a structural defect.

The data processing unit comprehensively evaluates the state of the tray by integrating the overall deformation amount calculation and the local deformation amount analysis. The calculated data is transmitted to the management system and reflected in the maintenance plan, and the analysis result is provided in the form of a visual report so that a worker can easily determine the state of the tray.

In one embodiment, displacement sensors disposed at the center and four corners of the tray measure the displacement at points in real time. The collected displacement data is transmitted to the data processing unit, and the data processing unit integrates all the data to calculate the overall deformation amount of the tray. For example, a structural weakness is detected by additionally analyzing a local deformation amount at a specific corner where the deformation amount exceeds a reference value. The data is used to establish a maintenance plan so that reinforcement or tray replacement work in a specific portion may be performed efficiently.

Operation S960 of predicting the expected lifetime of the tray on the basis of the deformation amount is performed through an analysis function of the data processing unit. The expected lifetime is calculated on the basis of the deformation amount data stored for a long period of time, usage environment, and load condition. The data processing unit calculates the expected lifetime, provides the expected lifetime to the management system, and automatically suggests a maintenance time.

The operating of predicting the expected lifetime, according to an embodiment of the present disclosure, may predict a usage period of the tray by combining the deformation amount data and the environmental condition.

The deformation amount data is a value calculated by comparing the displacement data collected at the plurality of measurement points in real time with the reference distance and comprehensively reflects the overall deformation state and the local deformation amount of the tray. The data is used to evaluate a current state of the tray and predict an increase rate of the deformation amount.

The environmental condition is an external factor exposing the tray and includes factors such as temperature, humidity, and a load change. The environmental condition is an important variable affecting a deformation rate and a usage period of the tray, and this data is combined with the deformation amount data to form a predictive model. The data processing unit integrally analyzes the deformation amount data and the environmental condition data to calculate the expected lifetime of the tray. The environmental condition is collected through a sensor in real time and a weight may be given to increase prediction accuracy.

For example, the data processing unit combines the deformation amount data with temperature and humidity conditions to calculate the expected lifetime of the tray. For example, when the temperature is about 40 °C and the increase rate of the deformation amount exceeds a threshold value, the data processing unit calculates the expected lifetime of the tray as six months and generates a notification to the management system. On the basis of the expected lifetime, a manager may adjust a maintenance schedule to efficiently plan replacement or reinforcement work of the tray.

Accordingly, the method of measuring a deformation amount of a tray for a secondary battery, according to an embodiment of the present disclosure, fixes the tray, moves the tray to the reference position, measures the displacement at the plurality of measurement points in real time, precisely calculates the deformation amount, and predicts the expected lifetime. Accordingly, an effect of accurately evaluating the state of the tray, efficiently performing maintenance work, and reducing management costs and time is provided.

FIG. 10 is a configuration diagram illustrating components of a system for measuring a deformation amount of a tray for a secondary battery according to an embodiment of the present disclosure.

Referring to FIG. 10, the tray 80 for a secondary battery is transferred to a position above the logistics frame 90 and stably fixed by the fixing part 100. The fixing part 100 prevents the tray 80 from shaking and tilting, thereby ensuring the accuracy of the deformation amount measurement process. The tray 80 is moved to the reference position by using the raising/lowering unit 200, and the raising/lowering unit 200 includes the rack jack 220 and the back-up unit 240 and adjusts a height of the tray 80 to maintain the tray 80 in a horizontal state.

The displacement sensors 300 are disposed at the center of tray 80 and the plurality of measurement points where the load distribution and deformation are likely to occur. The displacement sensor 300 is formed as an LVDT sensor and measures the displacement between the tray 80 and the reference distance at each point in real time. The measured displacement data is transmitted to the data processing unit 400 and analyzed, and the deformation amount is calculated by comparing the measured displacement data with the reference distance.

The logistics frame 90 supports the entire system and stably maintains the components, such as the fixing part 100, the raising/lowering unit 200, and the displacement sensor 300. The frame 90 is designed to prevent the tray 80 from shaking at the reference position, thereby providing stability during the deformation amount measurement process.

FIG. 11 is a diagram illustrating an arrangement of a plurality of measurement points and displacement sensors for measuring a deformation amount of a tray for a secondary battery according to an embodiment of the present disclosure.

Referring to FIG. 11, a plurality of measurement points 320 include (or correspond to) the center of the tray 80 and 1/4 horizontal and vertical points, and a total of five displacement sensors 300 are disposed to measure displacement. This arrangement is designed to precisely measure displacement at points where the load distribution and deformation of the tray 80 are likely to occur.

In addition, the method, according to an embodiment of the present disclosure, may be implemented in the form of a program command which is executable through various computer means and recorded on a computer-readable medium.

The computer-readable medium may include program commands, data files, data structures, and the like alone or in combination. The program commands recorded on the computer-readable medium may be specially designed and configured for the embodiments of the present disclosure or may be available to those skilled in the computer software field. Computer-readable recording media may include hardware devices configured to store and execute program commands. For example, the computer-readable recording media may include magnetic media such as a hard disk, a floppy disk, and a magnetic tape, optical recording media such as a compact disc read only memory (CD-ROM) and a digital versatile disc (DVD), a magneto-optical medium such as a floptical disk, a ROM, a RAM, a flash memory, and the like. The program commands may include machine language code generated by a compiler, as well as high-level language code which is executable by a computer using an interpreter or the like.

According to embodiments of the present disclosure, a method and apparatus for measuring a deformation amount of a tray that can measure a deformation amount of a tray for a secondary battery and analyze the deformation amount to evaluate a state of the tray are provided.

According to the embodiments of the present disclosure, by measuring the deformation amount of the tray for the secondary battery, deformation of the tray can be detected in advance to perform maintenance in a timely manner, and accidents such as damage and a fire in a battery cell can be prevented.

Although the present disclosure has been described above with respect to embodiments thereof, the present disclosure is not limited thereto. Various modifications and variations can be made thereto by those skilled in the art within the present disclosure as defined by the appended claims and their equivalents.

## Claims

1. A method of measuring a deformation amount of a tray for a secondary battery, the method comprising:
fixing a tray (80) for a secondary battery;
moving the tray (80) to a reference position;
measuring displacement at a plurality of measurement points on the tray (80); and
storing and analyzing data of the measured displacement, calculating a deformation amount, and evaluating a state of the tray (80).

2. The method as claimed in claim 1, wherein the fixing of the tray (80) is performed by a fixing part (100) in contact with a side surface of the tray (80) that prevents the tray (80) from shaking and tilting.

3. The method as claimed in claim 1 or 2, wherein the reference position is adjusted by using a raising/lowering unit (200) below the tray (80).

4. The method as claimed in claim 1, 2 or 3, wherein the plurality of measurement points comprise a center of the tray (80) and locations around the center of the tray (80).

5. The method as claimed in any one of claims 1 to 4, further comprising calculating the deformation amount by comparing the measured displacement data with a reference distance, and when the deformation amount exceeds a reference value, generating a warning for maintenance or replacement.

6. The method as claimed in claim 5, wherein the warning is transmitted to a management system (600) and reflected in a maintenance plan.

7. The method as claimed in any one of claims 1 to 6, wherein the measured displacement data is stored and used to predict an expected lifetime of the tray (80) and to establish a maintenance plan.

8. An apparatus for measuring a deformation amount of a tray (80) for a secondary battery, the apparatus comprising:
a fixing part (100) configured to fix a tray (80) of a secondary battery;
a raising/lowering unit (200) configured to move the tray (80) to a reference position;
a displacement sensor (300) configured to measure displacement at a plurality of measurement points on the tray (80);
a data processing unit (400) configured to store and analyze data of the measured displacement and to calculate a deformation amount and to evaluate a state of the tray (80); and
a controller (500) configured to control operations of the fixing part (100), the raising/lowering unit, the displacement sensor, and the data processing unit.

9. The apparatus as claimed in claim 8, wherein the raising/lowering unit (200) comprises:
a rack jack (220) below the tray (80) and configured to raise/lower the tray (80); and
a back-up unit (240) configured to support the tray (80) and maintain the tray (80) in a horizontal state.

10. The apparatus as claimed in claim 8 or 9, wherein the plurality of measurement points comprises a center of the tray (80) and locations around the center of the tray (80).

11. The apparatus as claimed in claim 8, 9 or 10, wherein the displacement sensor (300) is at a center of the tray (80) and the plurality of measurement points and measures displacement between the tray (80) and a reference distance at each point.

12. The apparatus as claimed in any one of claims 8 to 11, wherein the data processing unit (400) compares the data of the measured displacement with a reference distance to calculate the deformation amount and, when the deformation amount exceeds a reference value, the data processing unit (400) generates a warning for maintenance or replacement.

13. The apparatus as claimed in claim 12, wherein the warning is transmitted to an internal management system (600) and reflected in a maintenance plan.

14. The apparatus as claimed in any one of claims 8 to 13, wherein the data processing unit (400) predicts an expected lifetime of the tray (80) according to the measured displacement data and generates a maintenance time.

15. The apparatus as claimed in any one of claims 8 to 14, wherein the controller (500) is configured to synchronize movement of the reference position of the tray (80) and the measurement by the displacement sensor (300) and to transmit the data to the data processing unit (400) in real time.
